# EUROPÄISCHE PATENTANMELDUNG

(11) **EP 4 840 552 A1**
(43) Veröffentlichungstag der Anmeldung: **18.11.2026**
(21) Anmeldenummer: 26175016.0
(22) Anmeldetag: 28.04.2026
(51) Int. Cl.: B05C 5/02, B65D 83/00, G01F 11/02

(54) **DOSIERDÜSE FÜR EIN DOSIERSYSTEM SOWIE DOSIERSYSTEM**

(30) Priorität: 15.05.2025 DE 102025118865
(71) Anmelder: Festo SE & Co. KG, 73734 Esslingen (DE)
(72) Erfinder: Schuster, Tobias, 72766 Reutlingen (DE); Bühler, Andreas, 70372 Stuttgart (DE)
(74) Vertreter: Patentanwälte Magenbauer & Kollegen Partnerschaft mbB

(57) **Zusammenfassung**

Die Erfindung betrifft eine Dosierdüse (21) für ein Dosiersystem (1), mit einer Außenhülse (22), die an einer Außenoberfläche (31) mit einer Riegelwendel (32) versehen ist und die eine Durchgangsbohrung (35) aufweist, die längs einer Mittelachse (24) erstreckt ist, wobei eine Innenhülse (23; 73), die von einer längs der Mittelachse (24) erstreckten Fluidbohrung (41) durchsetzt ist, in der Durchgangsbohrung (35) aufgenommen ist und in einer Raumrichtung, die parallel zur Mittelachse (24) der Durchgangsbohrung (35) ausgerichtet ist, formschlüssig an der Außenhülse (22) abgestützt ist.

## Beschreibung

Die Erfindung betrifft eine Dosierdüse für ein Dosiersystem sowie ein Dosiersystem.

Die DE 10 2018 206 078 A1 offenbart ein Dosiersystem zum Dosieren einer vorgebbaren Flüssigkeitsmenge, mit einem Dosierventil, das ein Ventilgehäuse mit einem Eingangsanschluss und einem Ausgangsanschluss und einen dazwischen erstreckten Fluidkanal sowie ein beweglich zwischen einer Öffnungsstellung und einer Schließstellung im Fluidkanal angeordnetes Ventilglied umfasst, das in der Schließstellung abdichtend an einem im Fluidkanal ausgebildeten Ventilsitz anliegt und mit einer Antriebseinrichtung gekoppelt ist, die für eine Einleitung einer Bewegung auf das Ventilglied ausgebildet ist, sowie mit einer am Eingangsanschluss angeschlossenen Versorgungsleitung, die für eine fluidische Verbindung des Dosierventils mit einem Vorratsbehälter ausgebildet ist. Am Ausgangsanschluss des Dosierventils wird typischerweise eine Dosiernadel angebracht, bei der es sich beispielsweise um eine Kunststoffdüse oder eine Metallnadel handeln kann.

Die Aufgabe der Erfindung besteht darin, eine Dosierdüse und ein Dosiersystem bereitzustellen, mit denen Flüssigkeiten präzise dosiert werden können.

Diese Aufgabe wird für eine Dosierdüse der eingangs genannten Art dadurch gelöst, dass die Dosierdüse zweiteilig ausgebildet ist und eine Außenhülse aufweist, die an einer Außenoberfläche mit einer Riegelwendel versehen ist und die eine Durchgangsbohrung aufweist, die längs einer Mittelachse erstreckt ist, wobei eine Innenhülse, die von einer längs der Mittelachse erstreckten Fluidbohrung durchsetzt ist, in der Durchgangsbohrung aufgenommen ist und in einer Raumrichtung, die parallel zur Mittelachse der Durchgangsbohrung ausgerichtet ist, formschlüssig an der Außenhülse abgestützt ist.

Durch die zweiteilige Aufteilung der Dosierdüse in eine Außenhülse und eine Innenhülse wird eine vorteilhafte Anpassung dieser beiden Komponenten an die jeweiligen Randbedingungen ermöglicht, die von der jeweiligen Komponente erfüllt werden müssen. Hierbei hat die Außenhülse die Funktion, die mechanische Anbindung der Dosierdüse an eine Dosierschnittstelle sicherzustellen, die an einem Dosiergehäuse eines Dosierventils ausgebildet ist. Hierbei stehen eine vorteilhafte Montage und Demontage der Dosierdüse an die Dosierschnittstelle bzw. von der Dosierschnittstelle sowie eine Kraftübertragung zwischen der Dosierschnittstelle und der Innenhülse im Vordergrund.

Die Außenhülse weist an einer Außenoberfläche eine Riegelwendel auf, mit der eine formschlüssige Verriegelung der Dosierdüse am Dosiergehäuse verwirklicht werden kann. Diese Riegelwendel kann wahlweise als nutförmige Vertiefung in die Außenoberfläche der Außenhülse oder als radial von der Außenoberfläche abragender, wendelförmiger Vorsprung ausgebildet sein. Beispielhaft handelt es sich bei der Riegelwendel um ein Außengewinde mit einem Gewindegang oder mit mehreren Gewindegängen oder um zwei oder mehrere, vorzugsweise in gleicher Winkelteilung um eine Mittelachse der Außenhülse angeordnete, vertieft oder erhaben ausgebildete Wendelabschnitte, die einen Bestandteil eines Bajonettverschlusses oder eines Luer-Lock-Verschlusses mit dem Dosiergehäuse bilden.

Ferner weist die Außenhülse eine Durchgangsbohrung auf, in der die Innenhülse zumindest bereichsweise aufgenommen ist, wobei eine Gestaltung der Innenhülse sowie eine Gestaltung der Durchgangsbohrung in der Außenhülse derart aufeinander abgestimmt sind, dass die Innenhülse in einer Raumrichtung, die parallel zur Mittelachse der Außenhülse ausgerichtet ist, formschlüssig in der Außenhülse abgestützt ist. Bevorzugt sind die Gestaltung der Innenhülse und der Außenhülse derart aufeinander abgestimmt, dass in Raumrichtungen quer zur Mittelachse ebenfalls eine formschlüssige Abstützung der Innenhülse an der Außenhülse gewährleistet ist.

Die formschlüssige Abstützung zwischen der Außenhülse und der Innenhülse parallel zur Mittelachse ist lediglich in einer Raumrichtung wirksam, in der entgegengesetzten Raumrichtung kann die Innenhülse aus der Durchgangsbohrung der Außenhülse entnommen werden.

Die Innenhülse ist ihrerseits mit einer Fluidbohrung versehen, die bei korrekter Montage der Innenhülse in der Außenhülse koaxial zur Mittelachse der Durchgangsbohrung ausgerichtet ist und die für einen Fluidtransport zwischen einer Mündungsöffnung, die dem Dosiergehäuse des Dosierventils zugewandt ist, und einer Ausgabeöffnung, die dem Dosiergehäuse abgewandt ist, ausgebildet ist. Vorzugsweise ist vorgesehen, dass die Fluidbohrung im Bereich der Mündungsöffnung einen größeren Durchmesser als im Bereich der Ausgabeöffnung aufweist. Hierdurch kann beispielsweise eine Erhöhung einer Strömungsgeschwindigkeit für das Fluid, das die Fluidbohrung durchströmt, erzielt werden. Zusätzlich kann mit der Verjüngung der Fluidbohrung ein unerwünschtes Nachtropfen von Fluid nach Beendigung eines Fluiddosiervorgangs vermieden werden.

Vorteilhafte Weiterbildungen der Erfindung sind Gegenstand der Unteransprüche.

Zweckmäßig ist es, wenn eine Mündungsöffnung der Fluidbohrung von einem umlaufenden Dichtvorsprung berandet ist, der in axialer Richtung von einer Axialstirnfläche der Innenhülse abragt. Der Dichtvorsprung ist einstückig mit der Innenhülse ausgebildet und dient dazu, eine kraftschlüssige Dichtwirkung zwischen der Innenhülse und dem Dosiergehäuse, an dem die Dosierdüse aufgenommen werden soll, zu gewährleisten. Hierbei wird davon ausgegangen, dass das Material, aus dem die Innenhülse hergestellt ist, einen Elastizitätsmodul aufweist, der gleich oder größer als der Elastizitätsmodul eines Materials ist, aus dem das Dosiergehäuse im Bereich einer Düsenschnittstelle hergestellt ist, an der die Dosierdüse im Einsatzfall befestigt wird. Bevorzugt ist vorgesehen, dass der Dichtvorsprung in einer Querschnittsebene, die die Mittelachse der Durchgangsbohrung mit umfasst, eine Profilierung aufweist, die mit zunehmendem Abstand von der Axialstirnfläche der Innenhülse verjüngt ausgebildet ist. Beispielhaft kann die Profilierung des Dichtvorsprungs als schneidenförmig bezeichnet werden. Bevorzugt ist vorgesehen, dass der Dichtvorsprung kreisringförmig ausgebildet ist, um eine möglichst homogene Flächenpressung gegenüber der Düsenschnittstelle zu gewährleisten. Dies ist insbesondere auch dann der Fall, wenn die Fluidbohrung im Bereich der Mündungsöffnung keinen kreisförmigen Querschnitt aufweisen sollte.

Bevorzugt ist vorgesehen, dass eine Mündungsöffnung der Fluidbohrung von einer Dichtkante berandet ist, die von einer kegelabschnittsförmig zur Mittelachse hin verjüngten Axialstirnfläche der Innenhülse gebildet wird. Bei dieser Ausgestaltung der Innenhülse wird die zur formschlüssigen Abdichtung zwischen der Axialstirnfläche der Innenhülse und der gegenüberliegenden Düsenschnittstelle des Dosiergehäuses erforderliche Dichtkante als Übergang zwischen der Mündungsöffnung, die einen kreisförmigen Querschnitt aufweist, und einer kegelmantelförmig ausgebildeten Axialstirnfläche der Innenhülse ausgebildet ist. In einer Querschnittsebene, die die Mittelachse mit umfasst, ist die Axialstirnfläche ausgehend von der Mündungsöffnung abfallend ausgebildet.

Vorteilhaft ist es, wenn eine Außenoberfläche der Innenhülse in Richtung der Mündungsöffnung längs der Mittelachse eine zumindest bereichsweise Querschnittsvergrößerung aufweist und dass eine Innenoberfläche der Durchgangsbohrung der Außenhülse eine Querschnittsvergrößerung aufweist, die zur zumindest bereichsweisen Aufnahme der Querschnittsvergrößerung der Innenhülse ausgebildet ist. Die Querschnittsvergrößerung der Außenoberfläche der Innenhülse dient dazu, eine formschlüssige Kraftübertragung zwischen der Innenhülse und der Außenhülse längs der Mittelachse zu ermöglichen, sodass die an einem Dosiergehäuse festlegbare Außenhülse eine längs der Mittelachse ausgerichtete Andruckkraft auf die Innenhülse ausüben kann, damit diese abdichtend an der Düsenschnittstelle des Dosiergehäuses angepresst werden kann. Beispielhaft ist vorgesehen, dass die Querschnittsvergrößerung als Ringbund mit kreiszylindrischer Außenoberfläche ausgebildet ist, so dass eine axiale Kraftübertragung zwischen der Außenhülse und der Innenhülse über einander gegenüberliegende Kreisringflächen an der Innenhülse und der Außenhülse verwirklicht werden kann. Alternativ ist vorgesehen, dass die Querschnittsvergrößerung an der Innenhülse als Kegelabschnitt mit kegelmantelförmiger Außenoberfläche ausgebildet ist. Bevorzugt ist vorgesehen, dass eine Innenoberfläche der Durchgangsbohrung korrespondierend, insbesondere geometrisch ähnlich, zur Querschnittsvergrößerung ausgebildet ist. Hierdurch wird eine möglichst großflächige Kraftübertragung zwischen der Außenhülse und der Innenhülse erzielt.

Bei einer Weiterbildung der Erfindung ist vorgesehen, dass die Außenoberfläche der Innenhülse einen kreiszylindrisch ausgebildeten Führungsabschnitt aufweist und dass die Durchgangsbohrung bereichsweise kreiszylindrisch ausgebildet ist. Beispielhaft ist vorgesehen, dass die Querschnittsvergrößerung zwischen der Mündungsöffnung und dem kreiszylindrisch ausgebildeten Führungsabschnitt angeordnet ist, sodass der Führungsabschnitt einen größeren Abstand zur Mündungsöffnung als die Querschnittsvergrößerung aufweist. Mit dem Führungsabschnitt wird eine vorteilhafte radiale Zentrierung der Innenhülse gegenüber der Außenhülse gewährleistet. Bevorzugt ist vorgesehen, dass der Führungsabschnitt und die Durchgangsbohrung eine eng tolerierte Spielpassung bilden.

In weiterer Ausgestaltung der Erfindung ist vorgesehen, dass die Innenhülse aus einem Material aus der Gruppe: PTFE, PFA, PEEK, Glas, Keramik, Stahl, hergestellt ist. Bei PTFE handelt es sich um den Kunststoff Polytetrafluorethylen, bei PFA um den Kunststoff Perfluoralkoxy-Polymer, bei PEEK um den Kunststoff Polyetheretherketon. Der Werkstoff für die Innenhülse ist derart gewählt, dass bei einem bestimmungsgemäßen Gebrauch der Innenhülse lediglich eine elastische Deformation, jedoch keine plastische Deformation, der Innenhülse eintritt. Beispielsweise beträgt eine elastische Längendeformation der Innenhülse in einer Raumrichtung parallel zur Mittelachse weniger als 5 Prozent.

Die Aufgabe der Erfindung wird auch mit einem Dosiersystem gelöst, das ein elektrisch ansteuerbares Dosierventil aufweist, an dem eine erfindungsgemäße Dosierdüse angebracht ist, wobei das Dosierventil ein Dosiergehäuse aufweist, das von einem Fluidkanal durchsetzt ist, der sich von einem Eingangsanschluss zu einem Ausgangsanschluss erstreckt, wobei am Ausgangsanschluss eine Düsenschnittstelle ausgebildet ist, an der die Dosierdüse angebracht ist. Das Dosiersystem ist beispielsweise zu Verwendung in einer Abfüllanlage für flüssige Medikamente oder in einer automatisierten Laboranlage einsetzbar und ist für eine Ansteuerung mit einem elektrischen Ansteuersignal ausgebildet. Dieses Ansteuersignal kann von einer internen Steuerung des Dosiersystems oder von einer externen Maschinensteuerung einer Abfüllanlage oder einer Laboranlage bereitgestellt werden. Das Dosierventil weist ein Dosiergehäuse auf, das von einem Fluidkanal durchsetzt ist, wobei ein Querschnitt des Fluidkanals von einem Ventilglied verändert werden kann, das entweder unmittelbar im Fluidkanal oder durch eine Membran vom Fluidkanal abgetrennt ausgebildet ist. Das Ventilglied wird in Abhängigkeit von dem Ansteuersignal von einem Ventilantrieb des Dosierventils zwischen einer Öffnungsstellung für den Fluidkanal und einer Schließstellung für den Fluidkanal bewegt. Beispielhaft handelt es sich bei dem Ventilantrieb um einen Magnetspulenantrieb, der eine variable Kraftwirkung auf das Ventilglied in Abhängigkeit von einem Spulenstrom bereitstellt, der von der internen Steuerung oder von einer externen Steuerung an das Dosiersystem bereitgestellt wird.

Das Dosiersystem weist eine vom Ausgangsanschluss gebildete Düsenschnittstelle auf, die für eine Anbringung einer Dosierdüse am Dosiergehäuse ausgebildet ist. Die Dosierschnittstelle ist derart ausgebildet, dass bei Anbringung der Dosierdüse am Dosiergehäuse der Ausgangsanschluss des Fluidkanals in Überdeckung mit der Fluidbohrung der Innenhülse liegt und dass der an der Innenhülse ausgebildete Dichtvorsprung oder die an der Innenhülse ausgebildete Dichtkante eine Mündungsöffnung des Ausgangsanschlusses abdichtend umgibt.

Vorzugsweise ist vorgesehen, dass am Eingangsanschluss ein Vorratsbehälter für das zu dosierende Fluid angeschlossen ist, der derart angeordnet und ausgebildet ist, dass das Fluid bei geöffnetem Dosierventil vom Eingangsanschluss zum Ausgangsanschluss strömt.

Bei einer Weiterbildung des Dosiersystems ist vorgesehen, dass der Ausgangsanschluss eine Riegelgeometrie aufweist, die korrespondierend zur Riegelwendel der Dosierdüse ausgebildet ist. Bei dieser Riegelgeometrie kann es sich in Abhängigkeit von der Ausgestaltung der wenigstens einen an der Außenhülse ausgebildeten Riegelwendel um ein Innengewinde mit einem Gewindegang oder mit mehreren Gewindegängen oder um zwei oder mehrere, vorzugsweise in gleicher Winkelteilung um eine Mittelachse der Außenhülse angeordnete, erhaben oder vertieft ausgebildete Wendelabschnitte, die einen Bestandteil eines Bajonettverschlusses oder eines Luer-Lock-Verschlusses mit der Außenhülse bilden.

In weiterer Ausgestaltung des Dosiersystems ist vorgesehen, dass der Ausgangsanschluss eine Dichtfläche aufweist, die eine Mündungsöffnung des Fluidkanals berandet und dass die Dosierdüse mit einer Axialstirnfläche der Innenhülse abdichtend an der Dichtfläche anliegt. Vorzugsweise ist vorgesehen, dass die Dichtfläche einen geringeren Elastizitätsmodul als die Innenhülse aufweist, so dass bei einer Festlegung der Dosierdüse am Dosiergehäuse eine elastische Deformation der Dichtfläche etwas stärker als die elastische Deformation der Innenhülse ausfällt.

Bevorzugt ist vorgesehen, dass das Dosiergehäuse im Bereich der Düsenschnittstelle aus einem hochfesten Kunststoff, insbesondere PEEK oder PMMA, hergestellt ist.

Vorteilhaft Ausführungsformen der Erfindung sind in der Zeichnung dargestellt. Hierbei zeigt:
- Figur 1: eine schematische Seitenansicht eines Dosiersystems mit einem Dosierventil und einer am Dosierventil aufgenommenen Dosierdüse in einer teilweise geschnittenen Darstellung,

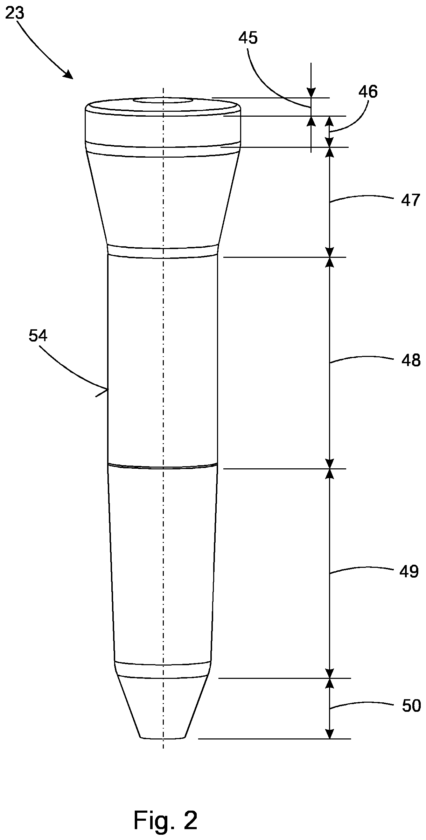

- Figur 2: eine leicht perspektivische Darstellung der Dosierdüse gemäß der Figur 1,
- Figur 3: eine leicht perspektivische Darstellung einer zweiten Ausführungsform einer Dosierdüse,
- Figur 4: die vergrößerte Detaildarstellung der Figur 1, und
- Figur 5: die vergrößerte Detaildarstellung der Figur 4 mit der zweiten Ausführungsform der Dosierdüse.

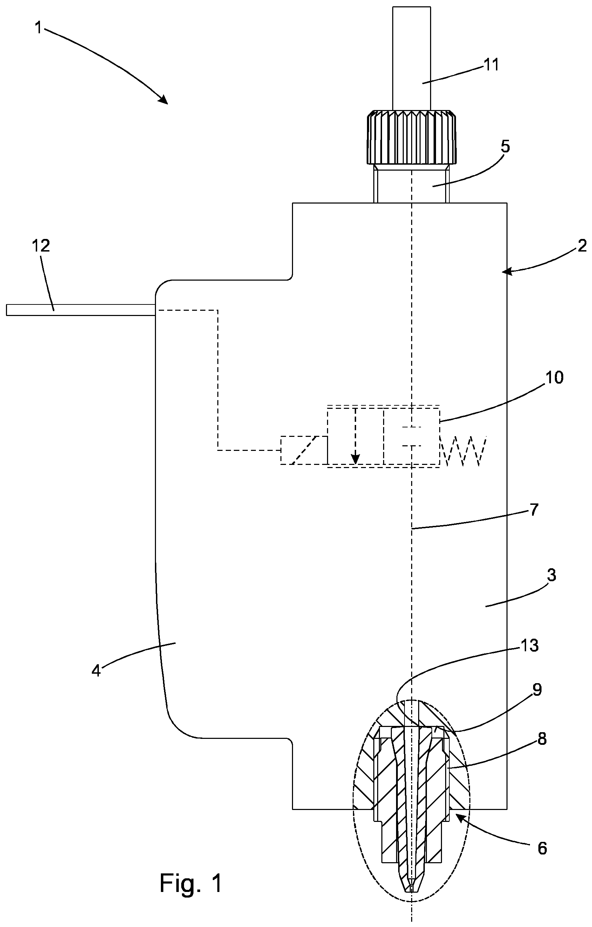

Ein in der Figur 1 nur streng schematisch dargestelltes Dosiersystem 1 ist zur Dosierung einer Flüssigkeit ausgebildet und kann beispielsweise in einer nicht gezeigten Abfüllanlage oder einem nicht gezeigten Laborsystem eingesetzt werden. Das Dosiersystem 1 umfasst ein Dosierventil 2 mit einem Dosiergehäuse 3 und einem Ventilantrieb 4.

Das Dosiergehäuse 3 ist für eine Führung des Fluids zwischen einem Eingangsanschluss 5 von einem Ausganganschluss 6 ausgebildet. Der Eingangsanschluss 5 ist hierbei rein exemplarisch als Schlauchkupplung ausgebildet, an die ein Fluidschlauch 11 angeschlossen ist, der mit einem nicht dargestellten FluidVorratsbehälter verbunden ist. Der Ausgangsanschluss 6 ist als Düsenschnittstelle ausgebildet und umfasst ein Innengewinde 8 sowie eine rein exemplarisch kreisringförmig ausgebildete Dichtfläche 9, an der eine Mündungsöffnung 13 eines Fluidkanals 7 angeordnet ist.

Der Fluidkanal 7 erstreckt sich zwischen dem Eingangsanschluss 5 und dem Ausgangsanschluss 6 durch das Dosiergehäuse 3 und ist mit einem nur streng schematisch gezeigten Steuerventil 10 versehen. Das Steuerventil 10 ist als 2/2-Proportionalwegeventil mit einfachwirkendem Magnetantrieb und Federrückstellung ausgebildet und kann durch Bereitstellung eines elektrischen Spulenstroms über eine Steuerleitung 12 aus der gezeigten Sperrstellung in eine Freigabestellung überführt werden. In Abhängigkeit von der Höhe des über die Steuerleitung 12 bereitgestellten Spulenstroms gibt das Steuerventil 10 den Fluidkanal 7 teilweise oder vollständig frei, sodass am Eingangsanschluss 5 bereitgestelltes Fluid zum Ausgangsanschluss 6 strömen kann. Bei Abschaltung des Steuerstroms nimmt das Steuerventil 10 die in der Figur 1 gezeigte Sperrstellung ohne weitere Energiezufuhr eigenständig ein.

In der Praxis handelt es sich bei dem Steuerventil 10 üblicherweise um ein mediengetrenntes Membranventil, bei dem abweichend von der Darstellung gemäß der Figur 1 keine unmittelbare Berührung zwischen dem beweglichen Ventilglied des Steuerventils 10 und dem im Fluidkanal 7 geführten Fluid vorliegt.

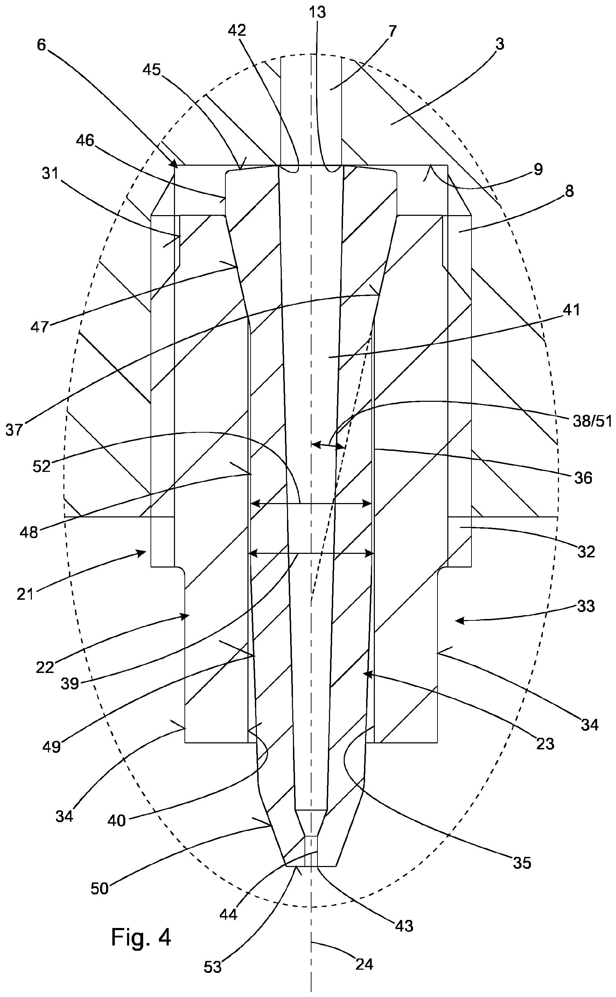

An dem auch als Düsenschnittstelle bezeichneten Ausgangsanschluss 6 ist eine Dosierdüse 21 festgelegt, mit der eine gezielte Abgabe von Flüssigkeit durch eine Abgabeöffnung 43 einer Innenhülse 23 in eine Umgebung des Dosiersystems 1 erfolgen kann. Wie der Detaildarstellung der Figur 4 entnommen werden kann, umfasst die Dosierdüse 21 zusätzlich zur Innenhülse 23 eine Außenhülse 22, die die Innenhülse 23 abschnittsweise umgibt und die für die Festlegung der Innenhülse 23 am Ausgangsanschluss 6 ausgebildet ist.

Die Außenhülse 22, die beispielsweise aus einem Kunststoffmaterial wie PEEK oder PMMA hergestellt ist, weist an einer Außenoberfläche 31 ein Außengewinde 32 auf, das für einen formschlüssigen Eingriff in ein Innengewinde 8 des Ausgangsanschlusses 6 vorgesehen ist. Das Außengewinde 32 bildet eine Riegelwendel und kann beispielsweise als eingängiges metrisches ISO-Gewinde oder als mehrgängiges Gewinde ausgebildet sein. Bei einer nicht dargestellten Ausführungsform von Riegelwendeln sind wendelförmige, radial abragende Vorsprünge oder wendelförmige, radial vertiefte Nuten für einen Bajonettverschluss oder eine Luer-Lock-Kupplung vorgesehen.

Die Außenhülse 22 ist an einem außerhalb des Dosiergehäuses 3 angeordneten Endbereich 33 mit paarweise gegenüberliegend angeordneten Planflächen 34 versehen, die beispielsweise als Schlüsselflächen für eine Einschraub- oder Ausschraubbewegung unter Verwendung eines Gabelschlüssels genutzt werden können.

Die Außenhülse 22 ist mit einer Durchgangsbohrung 35 versehen, die einen kreiszylindrischen Abschnitt 36 und eine sich daran anschließende, konusförmig erweiterte Querschnittsvergrößerung 37 aufweist. Eine Innenoberfläche 40 der Durchgangsbohrung 35 kann somit als Aneinanderreihung einer Zylinderhülle und einer Kegelhülle beschrieben werden.

In der Durchgangsbohrung 35 ist die Innenhülse 23 aufgenommen, die rotationssymmetrisch zu einer Mittelachse 24 der Außenhülse 22 und der Innenhülse 23 ausgebildet ist. Die Innenhülse 23 ist von einer Fluidbohrung 41 durchsetzt, die sich längs der Mittelachse 24 von einer Mündungsöffnung 42 bis zur Abgabeöffnung 43 erstreckt. Beispielhaft ist vorgesehen, dass sich die Fluidbohrung 41 ausgehend von der Mündungsöffnung 42 in Richtung der Abgabeöffnung 43 mit einem geringen Gefälle konusförmig verjüngt. Kurz vor der Abgabeöffnung 43 findet eine sprunghafte Vergrößerung des Gefälles für die Verjüngung der Fluidbohrung 41 statt woran sich ein kreiszylindrischer Ausgabeabschnitt 44 anschließt, der den Querschnitt der Abgabeöffnung 43 bestimmt.

Eine Außenoberfläche 54 der Innenhülse 23 kann in einen ersten Kegelabschnitt 45, einen ersten Zylinderabschnitt 46, einen zweiten Kegelabstand 47, einen zweiten Zylinderabschnitt 48, einen dritten Kegelabschnitt 49 einen vierten Kegelabschnitt 50 unterteilt werden.

Der erste Kegelabschnitt 45 weist eine im wesentlichen axiale Ausrichtung auf und wird auch als Axialstirnfläche der Innenhülse 23 bezeichnet. Der erste Kegelabschnitt 45 wird von der Fluidbohrung 41 durchsetzt, wobei eine Mündungsöffnung 42 am Übergang zwischen dem ersten Kegelabschnitt 45 und der Fluidbohrung 41 ausgebildet ist. Die kreisförmig umlaufende Mündungsöffnung 42 bildet eine Dichtkante, die für eine abdichtende Anlage an der Dichtfläche 9 des Ausgangsanschlusses 6 ausgebildet ist.

Angrenzend an den ersten Kegelabschnitt 45 ist der erste Zylinderabschnitt 46 ausgebildet, der als Übergang zum zweiten Kegelabschnitt 47 dient. Der auch als Querschnittsvergrößerung bezeichnete zweite Kegelabschnitt 47 ist rein exemplarisch mit einem Kegelwinkel 51 ausgebildet, der mit einem Kegelwinkel 38 der Querschnittsvergrößerung 37 der Außenhülse 22 übereinstimmt. Hierdurch wird eine formschlüssige Kraftübertragung zwischen der Außenhülse 22 und der Innenhülse 23 für eine Druckkraft, die längs der Mittelachse 24 in Richtung der Mündungsöffnung 42 ausgerichtet ist, ermöglicht. An den zweiten Kegelabschnitt 47 schließt sich der zweite Zylinderabschnitt 48 an, der auch als Führungsabschnitt bezeichnet werden kann. Ein Außendurchmesser 52 des zweiten Zylinderabschnitts 48 ist hierfür geringfügig kleiner als ein Innendurchmesser 39 der Durchgangsbohrung 35 gewählt. Dementsprechend bilden der zweite Zylinderabschnitt 48 und die Durchgangsbohrung 35 eine Spielpassung, die derart gewählt ist, dass eine vorteilhafte Führung und Ausrichtung der Innenhülse 23 gegenüber der Außenhülse 22 gewährleistet ist. Der dritte Kegelabschnitt 49 erleichtert die Montage der Innenhülse 23 in die Außenhülse 22. Der vierte Kegelabschnitt 50 weist verglichen mit dem dritten Kegelabschnitt 49 einen deutlich größeren Kegelwinkel gegenüber der Mittelachse 24 auf, sodass eine Stirnfläche 53, die vom Abgabeabschnitt 44 der Fluidbohrung 41 durchsetzt wird, einen geringen Flächeninhalt aufweist.

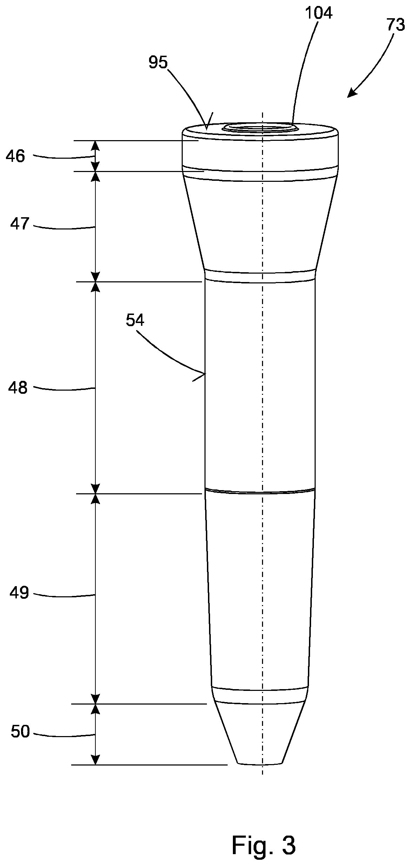

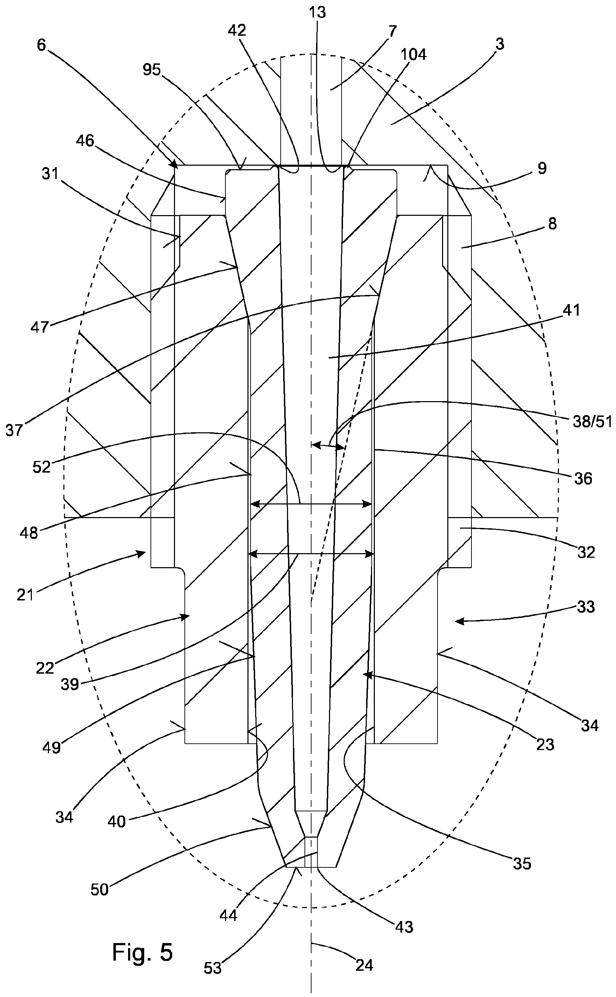

Die in den Figuren 3 und 5 gezeigte zweite Ausführungsform einer Innenhülse 73 weist mit Ausnahme der Gestaltung der Axialstirnfläche 95 die gleiche Geometrie wie die Innenhülse 23, so dass die nachfolgende Beschreibung der Innenhülse 73 auf die Axialstirnfläche 95 beschränkt werden kann. Rein exemplarisch ist die Axialstirnfläche 95 kreisringförmig in einer Ebene ausgebildet, die quer zur Mittelachse 24 ausgerichtet ist. Von der Axialstirnfläche 95 ragt ein längs der Mittelachse 24 erstreckter und koaxial zur Mittelachse 24 angeordneter Ringbund 104 ab, der für eine abdichtende Anlage an der Dichtfläche 9 des Ausgangsanschlusses 6 ausgebildet ist.

## Patentansprüche

1. Dosierdüse (21) für ein Dosiersystem (1), mit einer Außenhülse (22), die an einer Außenoberfläche (31) mit einer Riegelwendel (32) versehen ist und die eine Durchgangsbohrung (35) aufweist, die längs einer Mittelachse (24) erstreckt ist, wobei eine Innenhülse (23; 73), die von einer längs der Mittelachse (24) erstreckten Fluidbohrung (41) durchsetzt ist, in der Durchgangsbohrung (35) aufgenommen ist und in einer Raumrichtung, die parallel zur Mittelachse (24) der Durchgangsbohrung (35) ausgerichtet ist, formschlüssig an der Außenhülse (22) abgestützt ist.

2. Dosierdüse (21) nach Anspruch 1, **dadurch gekennzeichnet, dass** eine Mündungsöffnung (42) der Fluidbohrung (41) von einem umlaufenden Dichtvorsprung (104) berandet ist, der in axialer Richtung von einer Axialstirnfläche (95) der Innenhülse (23; 73) abragt.

3. Dosierdüse (21) nach Anspruch 1, **dadurch gekennzeichnet, dass** eine Mündungsöffnung (42) der Fluidbohrung (41) von einer Dichtkante berandet ist, die von einer kegelabschnittsförmig zur Mittelachse hin verjüngten Axialstirnfläche (45) der Innenhülse (23; 73) gebildet wird.

4. Dosierdüse (21) nach Anspruch 2 oder 3, **dadurch gekennzeichnet, dass** eine Außenoberfläche (54) der Innenhülse (23; 73) in Richtung der Mündungsöffnung (42) längs der Mittelachse (24) eine zumindest bereichsweise Querschnittsvergrößerung (47) aufweist und dass eine Innenoberfläche (40) der Durchgangsbohrung (35) der Außenhülse (22) eine Querschnittsvergrößerung (37) aufweist, die zur zumindest bereichsweisen Aufnahme der Querschnittsvergrößerung (47) der Innenhülse (23; 73) ausgebildet ist.

5. Dosierdüse (21) nach Anspruch 4, **dadurch gekennzeichnet, dass** die Außenoberfläche (54) der Innenhülse (23; 73) einen kreiszylindrisch ausgebildeten Führungsabschnitt (48) aufweist und dass die Durchgangsbohrung (35) bereichsweise kreiszylindrisch ausgebildet ist.

6. Dosierdüse (21) nach einem der vorhergehenden Ansprüche, **dadurch gekennzeichnet, dass** die Innenhülse (23; 73) aus einem Material aus der Gruppe: PTFE, PFA, PEEK, Glas, Keramik, Stahl, hergestellt ist.

7. Dosiersystem (1) mit einem elektrisch ansteuerbaren Dosierventil (2), das ein Dosiergehäuse (3) aufweist, das von einem Fluidkanal (7) durchsetzt ist, der sich von einem Eingangsanschluss (5) zu einem Ausgangsanschluss (6) erstreckt, wobei der Ausgangsanschluss (6) als Düsenschnittstelle ausgebildet ist und wobei am Ausgangsanschluss (6) eine Dosierdüse (21) nach einem der Ansprüche 1 bis 6 angebracht ist.

8. Dosiersystem (1) nach Anspruch 7, **dadurch gekennzeichnet, dass** der Ausgangsanschluss (6) eine Riegelgeometrie (8) aufweist, die korrespondierend zur Riegelwendel (32) der Dosierdüse (21) ausgebildet ist.

9. Dosiersystem (1) nach Anspruch 7 oder 8, **dadurch gekennzeichnet, dass** am Ausgangsanschluss (6) eine Dichtfläche (9) aufweist, die eine Mündungsöffnung (13) des Fluidkanals (7) berandet und dass die Dosierdüse (21) mit einer Axialstirnfläche (45; 95) der Innenhülse abdichtend an der Dichtfläche (9) anliegt.

10. Dosiersystem (1) nach Anspruch 7, **dadurch gekennzeichnet, dass** das Dosiergehäuse (3) im Bereich des Ausgangsanschlusses (6) aus einem hochfesten Kunststoff, insbesondere PEEK oder PMMA, hergestellt ist.
